Europäisches Patentamt

European Patent Office

Office européen des brevets

(11) Veröffentlichungsnummer: **0 114 691**
**A2**

(12) # EUROPÄISCHE PATENTANMELDUNG

(21) Anmeldenummer: **84100613.3**

(51) Int. Cl.³: **C 04 B 41/00**

(22) Anmeldetag: **20.01.84**

(30) Priorität: **21.01.83 DE 3302010**

(43) Veröffentlichungstag der Anmeldung:
**01.08.84 Patentblatt 84/31**

(84) Benannte Vertragsstaaten:
**DE FR GB IT**

(71) Anmelder: **Gebrüder Netzsch Maschinenfabrik GmbH & Co**
**Gebrüder-Netzsch-Strasse 19**
**D-8672 Selb(DE)**

(72) Erfinder:
**Der Erfinder hat auf seine Nennung verzichtet**

(74) Vertreter: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) **Verfahren zum Ausbessern von Glasurfehlern an keramischer Ware.**

(57) Zum Ausbessern von Glasurfehlern an glattgebrannter keramischer Ware werden die Fehlerstellen abgetragen, mit neuer Glasur bedeckt und anschließend werden durch Energiestrahlen ausschließlich die Fehlerstellen erneut gebrannt.

EP 0 114 691 A2

WUESTHOFF - v. PECHMANN - BEHRENS - GOETZ

EUROPEAN PATENT ATTORNEYS

DR. PHIL. FRIDA WUESTHOFF (1927-1956
DIPL.-ING. GERHARD PULS (1952-1971)
DIPL.-CHEM. ... FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

TELEFON: (089) 66 2c 51
TELEGRAMM: PROTECTPATENT
TELEX: 5 24 070

Gebrüder Netzsch

## Verfahren zum Ausbessern von Glasurfehlern an keramischer Ware

Die Erfindung betrifft ein Verfahren zum Ausbessern von Glasurfehlern an glattgebrannter keramischer Ware, bei dem die Fehlerstellen abgetragen, mit neuer Glasur bedeckt und erneut gebrannt werden.

Glasurfehler an keramischer Ware treten vor allem auf in Form von Poren, Befall, Blasen oder Flecken in der Glasur. Während kleinere keramische Ware, beispielsweise Geschirr, trotz solcher Glasurfehler möglicherweise noch als zweite oder dritte Wahl verkauft, andernfalls als Rücklaufmaterial erneut in die Produktion gegeben werden kann, ohne daß dadurch allzu große wirtschaftliche Einbußen entstehen, müssen Glasurfehler an größeren Stükken, insbesondere sanitärkeramischer Ware, wie Dusch-, Wasch- und Klosettbecken, ausgebessert werden, da solche Ware mit Glasurfehlern aus ästhetischen und teilweise auch aus hygienischen Gründen unverkäuflich, andererseits aber zu wertvoll ist, um als Ausschuß eingestuft zu werden.

Sanitärkeramische Ware wird üblicherweise durch Gießen hergestellt und nach dem Trocknen und Putzen glasiert, ohne zuvor gebrannt worden zu sein; als einziger Brand findet der Glattbrand nach dem Glasieren statt. Poren in der Glasur treten beispielsweise dadurch auf, daß die Ware vor dem Glasieren nicht genügend getrocknet worden ist. Befall kann vom Stück selbst stammen, beispielsweise infolge unsachgemäßen Ausblasens des Wasserrandes beim Putzen. Andere Quellen von Befall der Glasur sind ausbröckelnde Fugen am Gewölbe des Brennofens oder rostende Eisenkonstruktionen des Gebäudes, in dem die Ware glasiert und zum Brennen bereitgestellt wird. Blasen in der Glasur können dadurch entstehen, daß organische Einschlüsse in der keramischen Masse beim Brennen ausgasen. Schließlich können farbige Flecken in der Glasur von deren Rohstoffen stammen, beispielsweise blaue Flecken von Kobalt, grüne Flecken von Kupfer und braune Flecken von Eisen und Eisenoxid.

Solche Glasurfehler werden bei sanitärkeramischer Ware üblicherweise mit einer leicht handhabbaren, über eine Biegewelle angetriebenen Schleifscheibe ausgeschliffen, anschließend werden freigelegte Poren von Hand mit feuchter Glasur ausgeschmiert und schließlich wird über die Fehler ein Hauch Glasur gespritzt. Die derart behandelte Ware wird bisher insgesamt erneut gebrannt, wofür üblicherweise ein zusätzlicher Tunnelofen erforderlich ist, da die Anwärm- und Brennbedingungen dieser sogenannten Rückbrandware andere sind als bei Ware, die erstmals gebrannt wird.

Der Anteil der Stücke mit solchen Fehlern, die durch Rückbrand zu beseitigen sind, beträgt üblicherweise 20 %, kann aber auch auf 30 bis 40 % ansteigen. Dies bedeutet, daß die durch den Rückbrand verursachten Investitions- und Betriebskosten in gleichem Maß ansteigen und somit die durchschnittlichen Herstellkosten der Ware erheblich belasten.

Der Erfindung liegt deshalb die Aufgabe zugrunde, das eingangs beschriebene Verfahren derart weiterzubilden, daß zumindest der Energieaufwand für das erneute Brennen der mit neuer Glasur bedeckten Fehlerstellen erheblich vermindert wird.

Die Aufgabe ist erfindungsgemäß dadurch gelöst, daß durch Energiestrahlen ausschließlich die Fehlerstellen erneut gebrannt werden.

Erfindungsgemäß wird also der bisher erforderliche Rückbrand der ausgebesserten Stücke durch eine örtlich eng begrenzte Erhitzung ihrer Fehlerstellen ersetzt, wofür erheblich weniger Energie erforderlich ist.

Energiestrahlen sind in Form von Elektronenstrahlen, Laserstrahlen (Photonenstrahlen) und Plasmastrahlen bekannt. All diesen Strahlen ist gemeinsam, daß sich mit ihnen auf eng begrenzten Flächen in der hier interessierenden Größenordnung von meist weniger als 1 mm² so hohe Leistungsdichten erzielen lassen und ihre Eindringtiefe sich derart begrenzen läßt, daß im wesentlichen nur die an einer Fehlerstelle neu aufgetragene Glasur geschmolzen, der umgebende Bereich des keramischen Stücks aber so wenig erhitzt wird, daß sich eine Beschädigung des keramischen Stücks sicher vermeiden läßt.

Für die erfindungsgemäße Energiestrahlen-Behandlung von mit neuer Glasur bedeckten Fehlerstellen an keramischer Ware eignen sich bekannte Elektronenstrahl-Bearbeitungsmaschinen, bei denen die Bearbeitung außerhalb eines Vakuums erfolgen kann, sowie bekannte Photonensonden (Laser) und auch bekannte Plasmabrenner. All diese Geräte sind in handelsüblicher Form verwendbar und erfordern infolgedessen einen Investitionsaufwand, der geringer ist als derjenige eines üblichen Tunnelofens, der in den meisten sanitärkeramischen Fertigungsbetrieben zusätzlich als Rückbrandofen vorhanden ist und in Betrieb gehalten wird. Energieverbrauch und Platzbedarf eines Gerätes zur Durchführung des erfindungsgemäßen Verfahrens sind um Größenordnungen kleiner als bei einem Tunnelofen.

Gemäß einer Weiterbildung der Erfindung können die Energiestrahlen zum Verflüssigen der in Form eines Pulvers oder einer streichförmigen Paste aufgebrachten neuen Glasur verwendet werden.

Die Energiestrahlen können auch schon zum Abtragen der Fehlerstellen, insbes. durch Verdampfen, verwendet werden.

5628

WUESTHOFF · v. PECHMANN · BEHRENS · GOETZ
EUROPEAN PATENT ATTORNEYS

DR. PHIL FREDA WUESTHOFF (1927-1956)
DIPL-ING. GERHARD PULS (1952-1971)
DIPL.-CHEM DR. E. FREIHERR VON PECHMANN
DR.-ING. DIETER BEHRENS
DIPL-ING.; DIPL.-WIRTSCH.-ING. RUPERT GOETZ

D-8000 MÜNCHEN 90
SCHWEIGERSTRASSE 2
TELEFON: (089) 66 20 51
TELEGRAMM: PROTECTPATENT
TELEX: 5 24 070

0114691

Gebrüder Netzsch

## P a t e n t a n s p r ü c h e

1. Verfahren zum Ausbessern von Glasurfehlern an glattgebrannter keramischer Ware, bei dem die Fehlerstellen abgetragen, mit neuer Glasur bedeckt und erneut gebrannt werden, dadurch gekennzeichnet, daß durch Energiestrahlen ausschließlich die Fehlerstellen erneut gebrannt werden.

2. Verfahren nach Anspruch 1, dadurch gekennzeichnet, daß die Energiestrahlen zum Verflüssigen der in Form eines Pulvers oder einer streichfähigen Paste aufgebrachten neuen Glasur verwendet werden.

3. Verfahren nach Anspruch 1 oder 2, dadurch gekennzeichnet, daß die Energiestrahlen schon zum Abtragen der Fehlerstellen, insbes. durch Verdampfen, verwendet werden.

5628